# EUROPEAN PATENT SPECIFICATION

(11) **EP 3 408 506 B1**
(45) Date of publication and mention of the grant of the patent: **06.05.2020**
(21) Application number: 16795303.3
(22) Date of filing: 10.11.2016
(51) Int. Cl.: F01K 23/10, F01K 25/08, F01K 7/32

(54) **COMBINED CYCLE POWER PLANT**
KOMBIKRAFTWERK
CENTRALE ELECTRIQUE À CYCLE COMBINÉ

(30) Priority: 11.03.2016 EP 16159850
(43) Date of publication of application: 05.12.2018
(73) Proprietor: Siemens Aktiengesellschaft, 80333 München (DE)
(72) Inventor: ELSAKET, Gamal, 2252 CA Voorschoten (NL)
(86) International application number: PCT/EP2016/077329
(87) International publication number: WO 2017/153010

(56) References cited:
- EP-A1- 0 915 232
- EP-A1- 2 642 091
- EP-A2- 0 940 563
- JP-A- S5 781 104
- US-A1- 2015 059 341

## Description

The present invention relates to a combined cycle power plant according to claim 1.

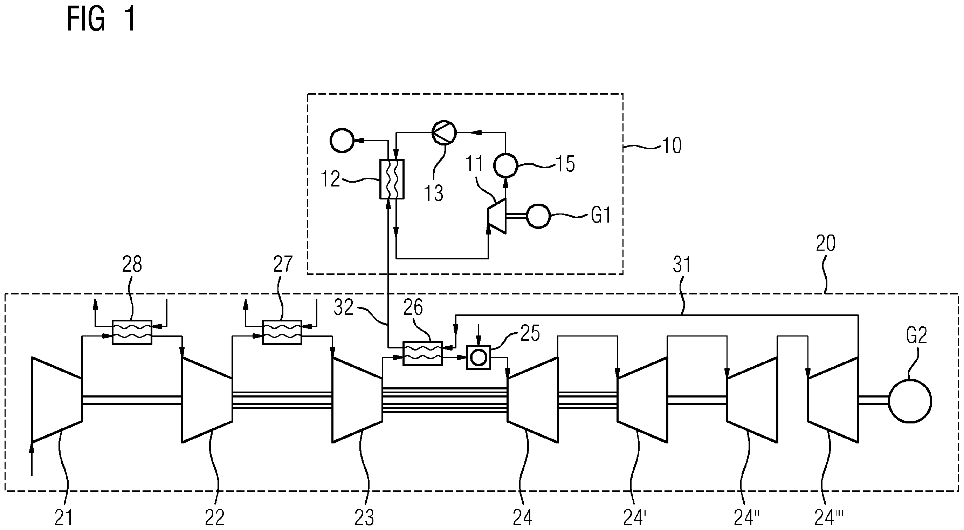

The efficiency of a simple cycle gas turbine power plant is relatively low and the temperature of the exhausted gas is high (400-600°C). Thus a significant portion of the fuel energy is dumped and not converted to the desired form of electrical energy. Thus a simple cycle gas turbine power plant is less suitable for a base load electrical power generation. But the high temperature of the exhausted gas allows the usage of heat recovery techniques in order to improve the overall plant efficiency. An example for such a combined cycle power plant is shown in FIG 1, where a gas turbine cycle is combined with a bottoming Rankine cycle or especially an organic Rankine cycle (ORC).

Most commonly used in combined cycle power plants is the bottoming Rankin-Cycle for recovering energy from the exhausted gas. Such a Rankin-Cycle typically is based on a water-steam fluid, whereas an organic Rankine cycle is based on the use of an organic, high molecular mass fluid. The low temperature of the exhaust gas is converted into useful work that may include conversion into electrical energy.

Furthermore the efficiency of the gas turbine cycle can be improved by intercoolers, where between two compressor stages, the compressed air is cooling, or with an recuperator, where the compressed air is heated up from the exhaust gas before entering the combustion chamber.

It is also possible to combine all those techniques to improve the overall efficiency of the combined cycle power plant. When recuperation is used, the exhaust gas will have low temperature in the range of typically 180 to 300°C. In this case using an organic Rankine cycle will be suitable due to the lower evaporation temperature of the organic fluid. But here, often the heat from the intercoolers is rejected to the atmosphere and not being used.

This problem is already addressed in the document "Thermodynamic and design considerations of organic Rankine cycles in combined application with a solar thermal gas turbine", by R. Braun, K. Kusterer, T. Sugimoto, K. Tanimura and D. Bohn, presented at the 6th International Conference on Pumps and Fans with Compressors and Wind Turbines. Here it was proposed to export in a combined cycle power plant the waste heat from the intercoolers to the organic Rankine cycle to heat up the cold organic fluid before it is heated to the final temperature by the exhaust gas heat exchanger. With that, the organic fluid has two heat sources, which are positioned in series within the organic Rankine cycle. The first heat source is the intercooler(s) and the second heat source is the exhaust gas of the gas turbine. The problem of such a state of the art arrangement is, that heating the ORC fluid by two heaters in series and using exhaust gas in the upper temperature level heater would lead to high exhaust temperature higher than the ORC fluid leaving the first ORC fluid heater. This would limit the maximum use of the energy in the exhaust gas. The design is not easy to control because the operation of the two heat sources are dependent on each other especially in part loads when the evaporation temperature changes with pressure. Combined Cycle Power Plants with a Rankine Cycle are also known from US 2015/005 9341 A1, EP 2 642 091 A1 and EP 0 940 563 A2.

It is thus an object of the present invention to provide a combined cycle power plant with a further improved overall efficiency.

According to the present invention, this object is achieved by a combined cycle power plant according to claim 1, comprising:
- an Rankine cycle with a turbine or an expander, an exhaust gas heat exchanger, a pump, a condenser and a first generator driven by the turbine,
- a multi shaft gas turbine cycle with at least two compressor stages, a combustor, at least one turbine stage and a second generator driven by the at least one turbine stage,
- wherein in a compressing air path between two compressor stages an intercooler is arranged such that a temperature of the compressed air for the combustor is decreased,
- in which the cold side path from the intercooler is connected in parallel to the exhaust gas exchanger of the Rankine cycle, such that the waste heat from the intercooler is feeding the Rankine cycle in addition to the exhaust gas heat from the exhaust gas heat exchanger.

The principle of the present invention, in short, is to reuse exhausted energy from the output of the gas turbine and wasted energy from the compressors intercooler for generating electricity in a Rankine cycle. According to the inventive combined cycle power plant concept, heat from intercooler is exported to the Rankine circle in parallel to the main heat source of the Rankine circle, which is the exhaust gas of the gas turbine. The cold pressurized Rankine medium is split into two flows. The main flow is heated up by exhaust gas to the desired temperature. The second flow is divided between the intercoolers then it is joined together after being heated up by the intercoolers. The medium at the exit of all heat sources of the Rankine circle have similar parameters (temperature and pressure), therefore they can be used for the same turbine.

In the embodiment, three compressor stages with two intercoolers are available, whereas each of intercooler is connected in parallel to the exhaust gas heat exchanger of the Rankine cycle. The advantage of such a design is that intercooling reduces the temperature of the compressed gas which reduces its volume. So the work done by the compressors will be less for less volume, which will reduce the input power resulting in higher efficiency of the gas turbine. The efficiency of a typically known organic Rankine cycle is around 13%, while in the present invention it is about 19%.

If at least one controllable valve is provided in feed lines of the cold side path from the intercooler for adjusting the amount of waste heat transferred from the intercooler to the organic Rankine Cycle, the amount of transferred waste heat can be adapted best onto the Organic Rankine cycle parameters.

In a further embodiment of the present invention, a recuperator is used to pre-heat the compressed air before the combustor while exhaust gas from the turbine exit is flowing along a hot side path of that recuperator. Thus allows fuel saving by preheating the compressed air and reducing heat requirement to reach the desired temperature.

When applying an organic Rankine cycle, an organic medium with an evaporation temperature can be used, which allow that the available heat sources are used at different temperature level. The advantage of this design is that total system efficiency is higher than in a typical gas turbine combined cycle.

If the organic fluid in the intercoolers and exhaust gas heat exchanger has a similar single supercritical phase, the organic Rankine cycle can be made very simple and is easy to control. This minimizes the equipment requirements such as no drums are required.

The invention now will be explained in more detail with reference to the appended drawings. The drawings show only an example of a practical embodiment of the invention, without limiting the scope of the invention.
- FIG 1: shows a schematic view of a state of the art combined cycle power plant,
- FIG 2: shows a schematic view of an advanced state of the art combined cycle power plant,
- FIG 3: shows a schematic view of the inventive combined cycle power plant.

Combined cycle power plants with a gas turbine cycle 20 and an organic Rankine cycle 10 as shown in FIG 1 are well known. Here, a multi-shaft gas turbine with three compressor stages 21, 22 and 23 compress the air for the combustor 25 in three steps before the compressed air is mixed with the fuel and ignited. Afterward the exhaust gas was expanded in four turbine stages 24, 24', 24" and 24'''. An electrical generator G2 is connected to the power turbine 24'''. To avoid that the energy of the exhaust gas from the last turbine stage will be rejected to the atmosphere, a Rankine cycle, or in this example an organic Rankine cycle 10, is added. The organic Rankine cycle 10 comprises a turbine 11 which is feed by a fluid heated in an exhaust gas heat exchanger 12. Furthermore a pump 13 and a condenser 15 are arranged within the organic Rankine cycle 10. At the end, the turbine 11 drives a first generator G1.

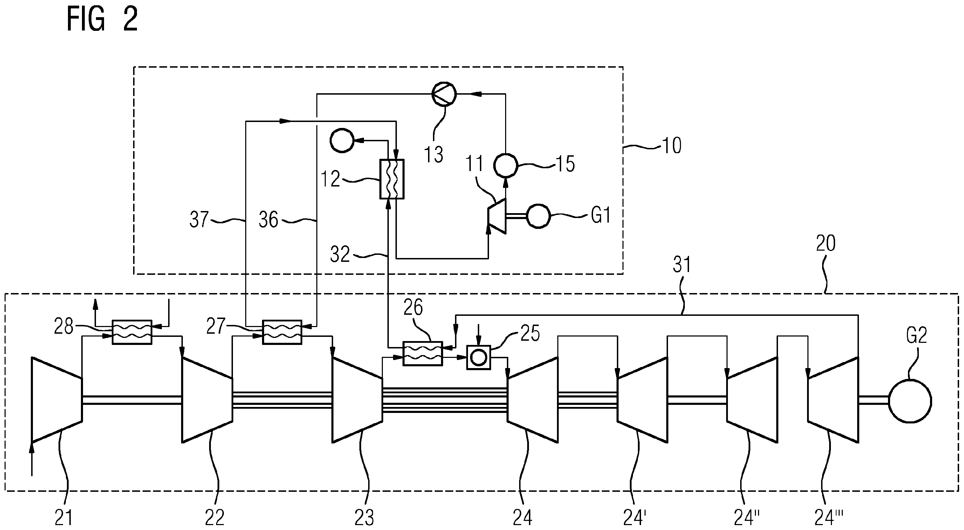

FIG 2 shows a schematic view of the known state of the art combined cycle power plant with a multi shaft gas turbine cycle 20 and an organic Rankine cycle 10, where the cold side path from the intercoolers 27 and 28 are connected via feed lines 36 and 37 in series to the Rankine cycle 10.

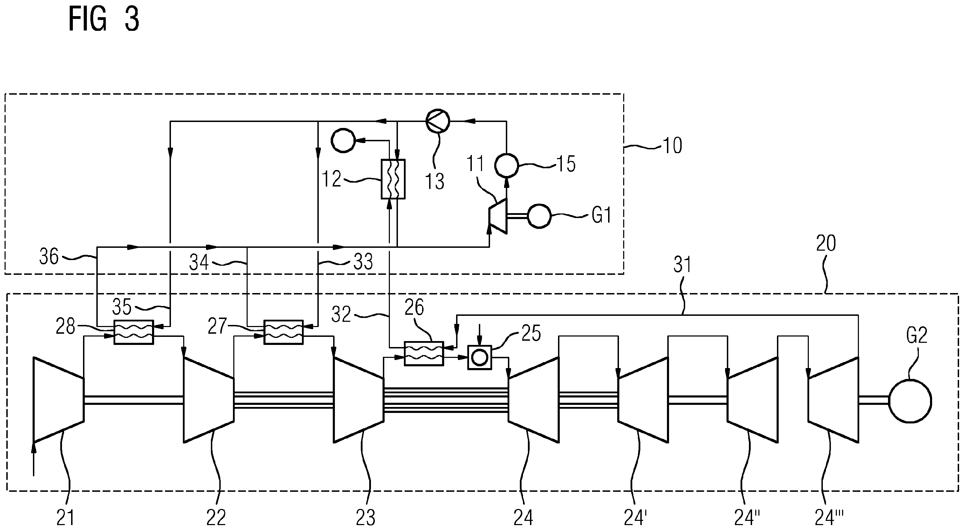

FIG 3 shows a schematic view of a preferred embodiment of the present invention. Here the combined cycle power plant comprises an Rankine cycle 10 with a turbine 11, an exhaust gas heat exchanger 12, a pump 13, a condenser 15 and a first generator (G1) driven by the turbine (11). Furthermore the combined cycle power plant comprises a multi shaft gas turbine cycle 20 with at least three compressor stages 21, 22 and 23, a combustor 25, four turbine stages 24, 24', 24" and 24''', and a second generator G2 driven by the at turbine stages. A recuperator 26 is used to pre-heat compressed air before the combustor 25 while exhaust gas is flowing first along a hot side path 31 and 32 to that recuperator 26 before this exhaust gas is feed to the exhaust gas heat exchanger 12 of the organic Rankine cycle 10. In the compressing air path between each of two compressor stages 21 and 22, as well as 22 and 23 an intercooler 27 and an intercooler 28 are arranged for decreasing the temperature of the compressed air. According to the present invention, the cold side path from the intercoolers 27 and 28 are connected in parallel to the exhaust gas exchanger 12 of the Rankine cycle 10, such that the waste heat from the intercoolers 27 are 28 are feeding the Rankine cycle in addition to the exhaust gas heat from the exhaust gas heat exchanger 12. In the shown preferred embodiment both intercoolers 27 and 28 are connected in parallel to the exhaust gas heat exchanger 12 of the Rankine cycle 10. The current invention offers flexibility because the parallel configuration of the heat sources where the organic Rankine cycle fluid is heated up to similar temperature by both heat exchangers. As a result the whole plant can be run in deep part loads. Below 20% load, if the intercooler heat is very low, the intercooler can be bypassed and the combined cycle can be operated.

By this improvement the overall efficiency of the combined cycle power plant increases due to the use of exhaust heat plus waste heat from the intercoolers. Typically an aero derivative, three-shaft gas turbine has an efficiency of about 41%. Adding an organic Rankine cycle, intercoolers and recuperator could increase the efficiency up to more than 55%.

## Claims

1. Combined cycle power plant comprising:
- an Rankine cycle (10) with a turbine (11), an exhaust gas heat exchanger (12), a pump (13), a condenser (15) and a first generator (G1) driven by the turbine (11),
- a multi shaft gas turbine cycle (20) with three compressor stages (21, 22, 23) and two intercoolers (27, 28), a combustor (25), at least one turbine stage (24, 24' ,24" ,24"') and a second generator (G2) driven by the at least one turbine stage (24, 24', 24", 24"'),
- wherein in each compressing air path between the compressor stages (21,22,23) an intercooler (27,28) is arranged such that a temperature of the compressed air for the combustor (25) is decreased, and wherein the cold side path from the intercoolers (27, 28) are connected in parallel to the exhaust gas exchanger (12) of the Rankine cycle (10), such that the waste heat from the intercoolers (27, 28) are feeding the Rankine cycle in addition to the exhaust gas heat from the exhaust gas heat exchanger (12), c h aracterized in that each of intercooler (27,28) is connected in parallel to the exhaust gas heat exchanger (12) of the Rankine cycle (10).

2. Combined cycle power plant according to claim 1, **characterized in that** at least one controllable valve is provided in feed lines (34, 36) of the cold side path from the intercooler (27,28) for adjusting the amount of waste heat transferred from the intercooler (27,28) to the Rankine Cycle (10).

3. Combined cycle power plant according to any of claim 1 or 2,
**characterized in that**
a recuperator (26) is used to pre-heat fuel for the combustor (25) while exhaust gas is flowing along a hot side path (31,32) of that recuperator (26).

4. Combined cycle power plant according to any of the claims 1 to 3,
**characterized in that**
Rankine cycle is an organic Rankine cycle.

5. Combined cycle power plant according to any of the claims 1 to 4,
**characterized in that**
organic fluid in the intercoolers (27,28) and exhaust gas heat exchanger (12) have a similar single phase, which is supercritical.

## Patentansprüche

1. Kombikraftwerk umfassend:
- einen Rankine-Kreisprozess (10) mit einer Turbine (11), einen Abgaswärmeübertrager (12), eine Pumpe (13), einen Verflüssiger (15) und einen ersten Generator (G1), der von der Turbine (11) angetrieben wird,
- eine mehrwellige Gasturbinenzykluseinheit (20) mit drei Kompressorstufen (21, 22, 23) und zwei Ladeluftkühlern (27, 28), einer Brennkammer (25), mindestens einer Turbinenstufe (24, 24', 24'', 24''') und einem zweiten Generator (G2), der von der mindestens einen Turbinenstufe (24, 24', 24'', 24''') angetrieben wird,
- wobei in jedem Druckluftweg zwischen den Kompressorstufen (21, 22, 23) ein Ladeluftkühler (27, 28) so angeordnet ist, dass eine Temperatur der Druckluft für die Brennkammer (25) verringert wird, und wobei
der Weg der kalten Seite der Ladeluftkühler (27, 28) parallel zu dem Abgaswärmeübertrager (12) des Rankine-Kreisprozesses (10) geschaltet ist, sodass der Rankine-Kreisprozess zusätzlich zur Wärme der Abgase von dem Abgaswärmeübertrager (12) mit der Abwärme der Ladeluftkühler (27, 28) versorgt wird,
**dadurch gekennzeichnet, dass**
jeder Ladeluftkühler (27, 28) parallel zu dem Abgaswärmeübertrager (12) des Rankine-Kreisprozesses (10) geschaltet ist.

2. Kombikraftwerk nach Anspruch 1,
**dadurch gekennzeichnet, dass**
mindestens ein regelbares Ventil in den Versorgungsleitungen (34, 36) des Wegs der kalten Seite von den Ladeluftkühlern (27, 28) bereitgestellt wird, um die Menge der Abwärme einzustellen, die von den Ladeluftkühlern (27, 28) an den Rankine-Kreisprozess (10) übertragen wird.

3. Kombikraftwerk nach einem der Ansprüche 1 oder 2,
**dadurch gekennzeichnet, dass**
ein Rekuperator (26) verwendet wird, um einen Kraftstoff für die Brennkammer (25) vorzuwärmen, während ein Abgas entlang des Wegs der warmen Seite (31, 32) von diesem Rekuperator (26) strömt.

4. Kombikraftwerk nach einem der Ansprüche 1 bis 3,
**dadurch gekennzeichnet, dass**
der Rankine-Kreisprozess ein organischer Rankine-Kreisprozess ist.

5. Kombikraftwerk nach einem der Ansprüche 1 bis 4,
**dadurch gekennzeichnet, dass**
ein organisches Fluid in den Ladeluftkühlern (27, 28) und dem Abgaswärmeübertrager (12) eine ähnliche Einzelphase aufweist, die superkritisch ist.

## Revendications

1. Centrale électrique à cycle combiné, comprenant :
- un cycle (10) de Rankine ayant une turbine (11), un échangeur de chaleur (12) de gaz d'échappement, une pompe (13), un condenseur (15) et un premier générateur (G1) entraîné par la turbine (11),
- un cycle (20) de turbine à gaz à plusieurs arbres, ayant trois étages (21, 22, 23) de compresseur et deux refroidisseurs (27, 28) intermédiaires, une chambre de combustion (25), au moins un étage (24, 24', 24'', 24"') de turbine et un deuxième générateur (G2) entraîné par le au moins un étage (24, 24', 24'', 24''') de turbine,
- dans laquelle il est monté, dans chaque trajet de compression d'air entre les étages (21, 22, 23) de compresseur, un refroidisseur (27, 28) intermédiaire, de manière à abaisser une température de l'air comprimé pour la chambre de combustion (25), et dans laquelle le trajet du côté froid, à partir des refroidisseurs (27, 28) intermédiaires, est en parallèle avec l'échangeur de chaleur (12) de gaz d'échappement du cycle (10) de Rankine, de manière à ce que la chaleur perdue, provenant des refroidisseurs (27, 28) intermédiaires, soit envoyée au cycle de Rankine en plus de la chaleur du gaz d'échappement provenant de l'échangeur de chaleur (12) de gaz d'échappement,
**caractérisée en ce que**
chaque refroidisseur (27, 28) intermédiaire est monté en parallèle à l'échangeur de chaleur (12) de gaz d'échappement du cycle (10) de Rankine.

2. Centrale électrique à cycle combiné suivant la revendication 1,
**caractérisée en ce qu'**
au moins une vanne pouvant être commandée est prévue dans des lignes (34, 36) d'alimentation du trajet du côté froid, à partir du refroidisseur (27, 28) intermédiaire, pour régler la quantité de chaleur perdue, transférée du refroidisseur (27, 28) intermédiaire au cycle (10) de Rankine.

3. Centrale électrique à cycle combiné suivant l'une quelconque des revendications 1 ou 2,
**caractérisée en ce qu'**
un récupérateur (26) est utilisé pour préchauffer du combustible pour la chambre de combustion (25), tandis que du gaz d'échappement passe suivant un trajet (31, 32) du côté chaud de ce récupérateur (26).

4. Centrale électrique à cycle combiné suivant l'une quelconque des revendications 1 à 3,
**caractérisée en ce que**
le cycle de Rankine est un cycle de Rankine organique.

5. Centrale électrique à cycle combiné suivant l'une quelconque des revendications 1 à 4,
**caractérisée en ce que**
du fluide organique dans les refroidisseurs (27, 28) intermédiaires et dans l'échangeur de chaleur (12) de gaz d'échappement ont une phase unique semblable, qui est supercritique.
